# EUROPEAN PATENT SPECIFICATION

(11) **EP 1 826 436 B1**
(45) Date of publication and mention of the grant of the patent: **15.04.2009**
(21) Application number: 06025733.4
(22) Date of filing: 12.12.2006
(51) Int. Cl.: F16D 27/00, F16D 28/00, F16D 29/00

(54) **Clutch actuator**
Kupplungsaktuator
Actionneur pour embrayage

(30) Priority: 18.04.2006 JP 2006114706; 24.02.2006 JP 2006048086
(43) Date of publication of application: 29.08.2007
(73) Proprietor: Yamaha Hatsudoki Kabushiki Kaisha, Iwata-shi, Shizuoka 438-8501 (JP)
(72) Inventor: Kosugi, Makoto, Iwata-shi Shizuoka-ken 438-8501 (JP); Takeuchi, Yoshihiko, Iwata-shi Shizuoka-ken 438-8501 (JP)
(74) Representative: Grünecker, Kinkeldey, Stockmair & Schwanhäusser Anwaltssozietät

(56) References cited:
- EP-A1- 1 156 240
- DE-U1-5202005 017 52
- GB-A- 2 293 426
- JP-A- 2005 282 784
- US-A- 5 781 370
- US-A1- 2005 120 819

## Description

The present invention relates to a clutch actuator that engages and disengages a clutch, an engine unit including the clutch actuator, and a saddle-type vehicle, such as a motorcycle, including the engine unit.

Conventionally, a system is known in which a manual transmission is fitted with an actuator to automatically perform start, stop, and shift change operations (the disengagement of a clutch, gear change, and the engagement of a clutch) according to the intention of a driver or the condition of the vehicle.

Of the actuators used in the system, a clutch actuator described in Patent Document 1 is known as an example of the clutch actuator that engages and disengages a clutch. The clutch actuator includes a motor and a worm shaft that rotates coaxially with the motor shaft of the motor. The end of the worm shaft has a thread portion. The clutch actuator includes a worm wheel that engages with the thread portion, a crankshaft that converts the rotary motion of the worm wheel to a linear reciprocating motion, and an output rod connected to the crankshaft. The clutch actuator is constructed such that the rotary motion of the motor is finally converted to axial reciprocating motion of the output rod, and the engagement and disengagement of the clutch are performed using the reciprocating motion of the output rod.
Patent Document 1: JP-A-2005-282784 discloses the features of the preamble of claim 1.

However, the inventor et al. have found that the clutch actuator disclosed in Patent Document 1 has the problem in the responsiveness of clutch operation if applied to saddle-type vehicles such as motorcycles. Specifically, the reciprocating motion of the output rod does not rapidly follow the rotary motion of the motor, resulting in low responsiveness of clutch apply and release operation.

The present invention has been made in light of such circumstances, and has as an object the provision of a clutch actuator in which the responsiveness of clutch work can be improved, and an engine unit including the clutch actuator, and a saddle-type vehicle including the engine unit.

This objective is solved in an inventive manner by a clutch actuator having the features of claim 1.

Preferably, the rotation angle of the worm wheel at the on-off operation of the clutch exceeds 90 degrees.

Further, preferably the number of threads of the thread portion is three or more.

According to another preferred embodiment, the clutch actuator further comprises a rotation-angle sensor that measures the rotation angle of the worm wheel, and a controller that controls the motor on the basis of the result of the measurement of the rotation-angle sensor.

Preferably, the motor comprises a motor shaft, said motor shaft being in engagement with and being coaxially arranged with the worm shaft. Therein, the motor shaft and the worm shaft may be connected by a spline joint.

Further, preferably there is provided a clutch comprising a clutch actuator according to one of the above embodiments.

Further, preferably there is provided an engine unit comprising an engine, and a clutch actuator according to one of the above embodiments

Further, preferably there is provided a saddle-type vehicle comprising the engine unit according to the above embodiment.

In the following, the present invention is explained in greater detail with respect to several embodiments thereof in conjunction with the accompanying drawings, wherein:
- Fig. 1: is a side view of a motorcycle according to an embodiment,
- Fig. 2: is a diagram showing the installation of the components of an automated manual transmission system,
- Fig. 3: is a diagram showing the installation of the components of the automated manual transmission system,
- Fig. 4: is a diagram showing the installation of the components of the automated manual transmission system,
- Fig. 5: is a diagram showing the installation of the components of the automated manual transmission system,
- Fig. 6: is a diagram showing the installation of the components of the automated manual transmission system,
- Fig. 7: is a sectional view of the interior structure of an engine,
- Fig. 8: is a schematic diagram of a shift actuator, a shift rod, and a shift mechanism,
- Fig. 9: is a side view of the shift actuator, the shift rod, and the shift mechanism,
- Fig. 10: is a schematic diagram of a clutch actuator,
- Fig. 11: is a side view of the clutch actuator,
- Fig. 12: is a cross-sectional view taken along line A-A of Fig. 11,
- Fig. 13: is a cross-sectional view taken along line B-B of Fig. 12,
- Fig. 14: is an enlarged sectional view of the engaged portion of a motor shaft and a worm shaft,
- Fig. 15: is an enlarged view of the thread portion of the worm shaft,
- Fig. 16: is a perspective view of the switch section of a handle grip, and
- Fig. 17: is a system diagram of the automated manual transmission system.

### Description of Reference Numerals and Signs:

1: motorcycle (saddle-type vehicle)
20: engine
60: clutch actuator (clutch actuator)
60a: clutch motor (motor)
60b: motor shaft
103: worm shaft
103c: thread portion
103d: threads
105: worm wheel
S3: clutch-position sensor (rotation-angle sensor)

The present teaching is described in detail below based on an embodiment, with reference to the attached drawings.

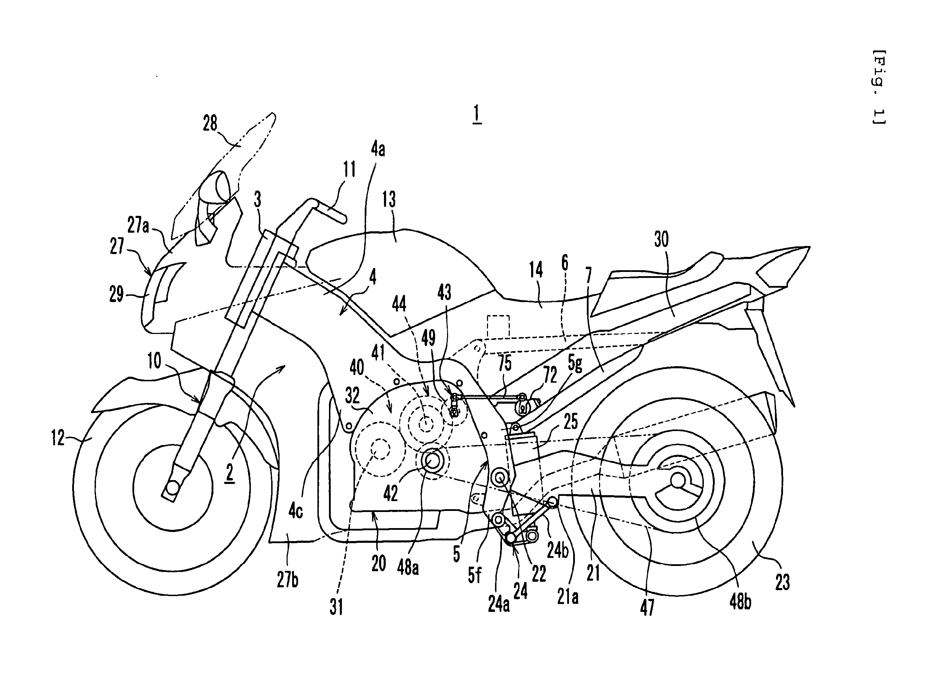

Fig. 1 is a side view of a motorcycle 1 according to the embodiment. As shown in Fig. 1, the motorcycle 1 according to the embodiment includes a head pipe 3 and a body frame 2. The body frame 2 includes at least a main frame 4 extending rearward from the head pipe 3 and a rear-arm bracket 5 extending downward from the rear of the main frame 4. The main frame 4 includes two frames 4a (only one is shown in Fig. 1) extending to the right and left rear from the head pipe 3. The rear of the frames 4a extends downward into connection with the rear-arm bracket 5.

A front fork 10 is pivoted on the head pipe 3. At the upper end of the front fork 10, a steering handle 11 is disposed; at the lower end, a front wheel 12 is disposed. A fuel tank 13 is disposed on the main frame 4. Behind the fuel tank 13, a seat 14 is disposed. The seat 14 is placed on a seat rail 6.

The main frame 4 and the rear-arm bracket 5 suspend an engine 20. The engine 20 is supported by the engine mounting portions 4c and the frames 4a of the main frame 4, and is also supported by the engine mounting portion (not shown) of the rear-arm bracket 5. The engine 20 is not limited to the internal-combustion engine such as a gasoline engine, but may be a motor engine etc. The engine may be a combination of a gasoline engine and a motor engine.

The rear-arm bracket 5 supports the front end of a rear arm 21 so as to pivot vertically on a pivot shaft 22. The rear end of the rear arm 21 supports a rear wheel 23. The rear arm 21 is supported by the body frame 2 via a link mechanism 24 and a rear cushion unit 25. The link mechanism 24 has a vehicle-body side link 24a and a rear-arm side link 24b. A first end of the vehicle-body side link 24a connects rotatably to a link mounting portion 5f of the rear-arm bracket 5. A first end of the rear-arm side link 24b connects rotatably to a link mounting portion 21a of the rear arm 21. The center of the vehicle-body side link 24a and a second end of the rear-arm side link 24b are rotatably joined together. The lower part of the rear cushion unit 25 is supported by a second end of the vehicle-body side link 24a, and the upper part is supported by a cushion mounting portion 5g. The rear cushion unit 25 is disposed behind the rear-arm bracket 5.

The body frame 2 also has a cowling 27. The cowling 27 includes an upper cowling 27a that covers the front of the steering handle 11 and a lower cowling 27b that covers the front and the right and left sides of the main frame 4 and the right and left lower parts of the engine 20. The upper cowling 27a is supported by the body frame 2 via a stay (not shown). The upper cowling 27a forms the front surface and the right and left sides of the vehicle. The upper cowling 27a has a transparent screen 28 and a head lamp 29 mounted to the front upper part of the vehicle. The backstays 7 have side covers 30 for covering the right and left sides of the seat 14 and a space above the rear wheel 23.

The type of the engine 20 is not limited at all. The engine 20 of this embodiment is of a water-cooled four-cycle parallel four-cylinder type. In the engine 20, a cylinder shaft (not shown) cants to the front of the vehicle at a slight angle relative to a horizontal line, and a crankcase 32 containing a crankshaft 31 is suspended on both sides of the vehicle by the body frame 2.

The engine 20 includes a transmission 40. The transmission 40 includes a main shaft 41 disposed in parallel to the crankshaft 31, a drive shaft 42 disposed in parallel to the main shaft 41, and a shift mechanism 43 including a multiple-step speed change gear 49, and is integrated with the crankcase 32. The clutch mechanism 44 interrupts the transmission of the rotation at the switching of the speed change gear 49.

The drive shaft 42 has a drive sprocket 48a. A chain 47 is wound around the drive sprocket 48a and a driven sprocket 48b disposed at the rear wheel 23. Thus the power of the engine is transmitted to the rear wheel 23 through the chain 47.

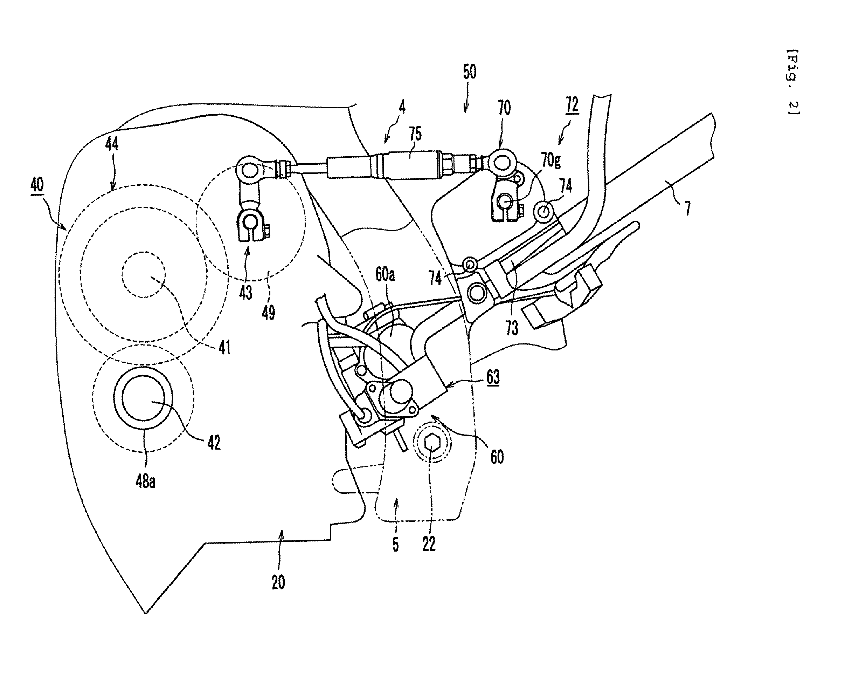

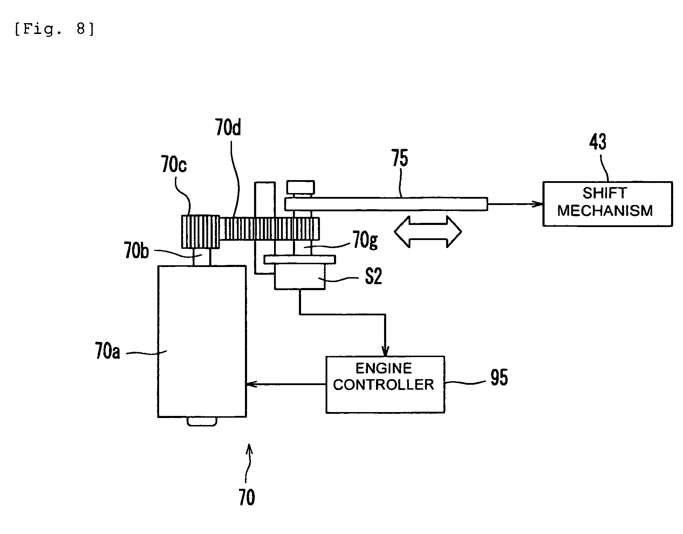

An automated manual transmission system 50 of the motorcycle 1 will be described. Figs. 2 to 6 show the installation of the components of the automated manual transmission system 50. As shown in Fig. 2, the automated manual transmission system 50 automatically operates the clutch mechanism 44 and switches the speed change gear of the transmission 40. The automated manual transmission system 50 includes a clutch actuator 60 for actuating the clutch mechanism 44, a shift actuator 70 for switching the speed change gear of the transmission 40, and an engine controller 95 that controls the operation of the clutch actuator 60 and the shift actuator 70 (not shown in Fig. 2, see Fig. 8).

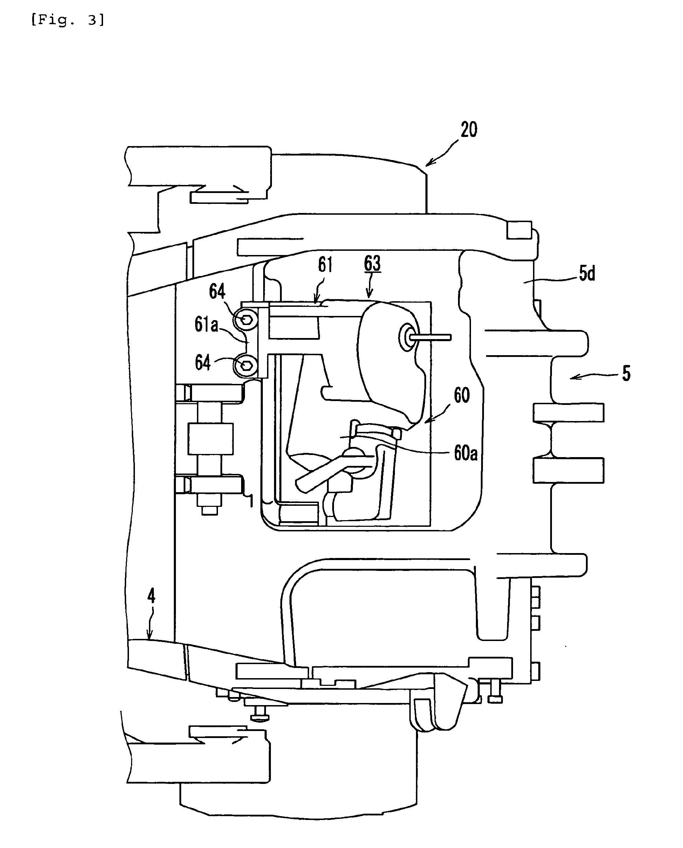

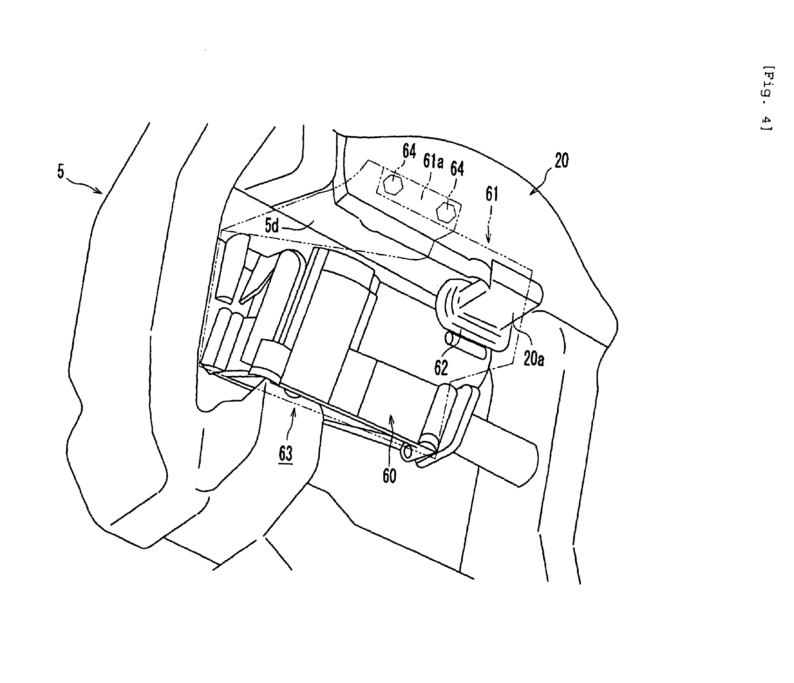

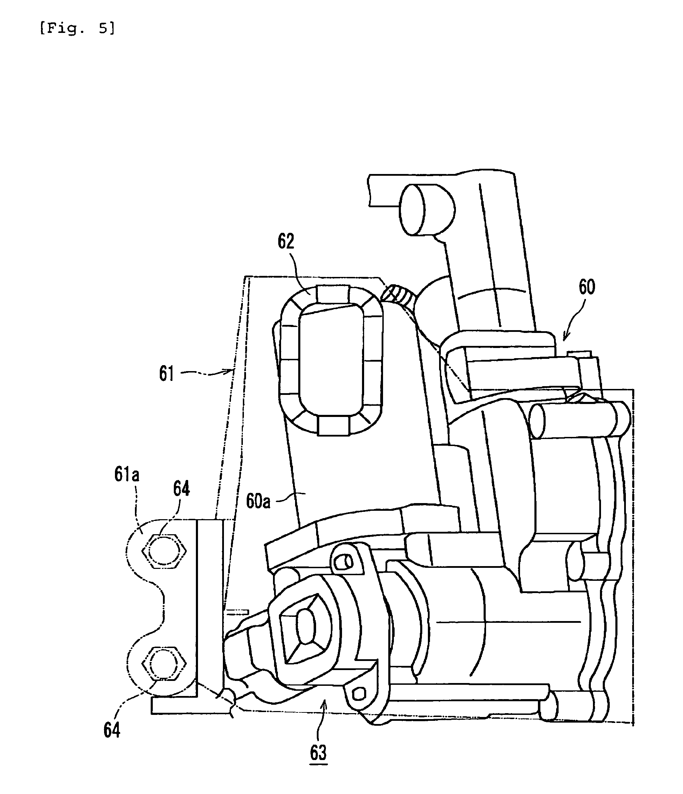

As shown in Fig. 3, the clutch actuator 60 is formed as a clutch operation unit 63 in which various components are integrated with a mounting plate 61. The mounting plate 61 has an engage hole 62 fixed thereto (see Figs. 4 and 5). As shown in Fig. 4, the clutch operation unit 63 is fixed in such a way that the engage hole 62 is fitted on a projection 20a fixed to the rear of the engine 20, and a mounting portion 61a of the mounting plate 61 is secured to the member 5d of the rear-arm bracket 5 with tightening members 64 such as bolts. The position of the clutch operation unit 63 is surrounded by the rear-arm bracket 5 behind the engine 20, as viewed from the side (see Fig. 1).

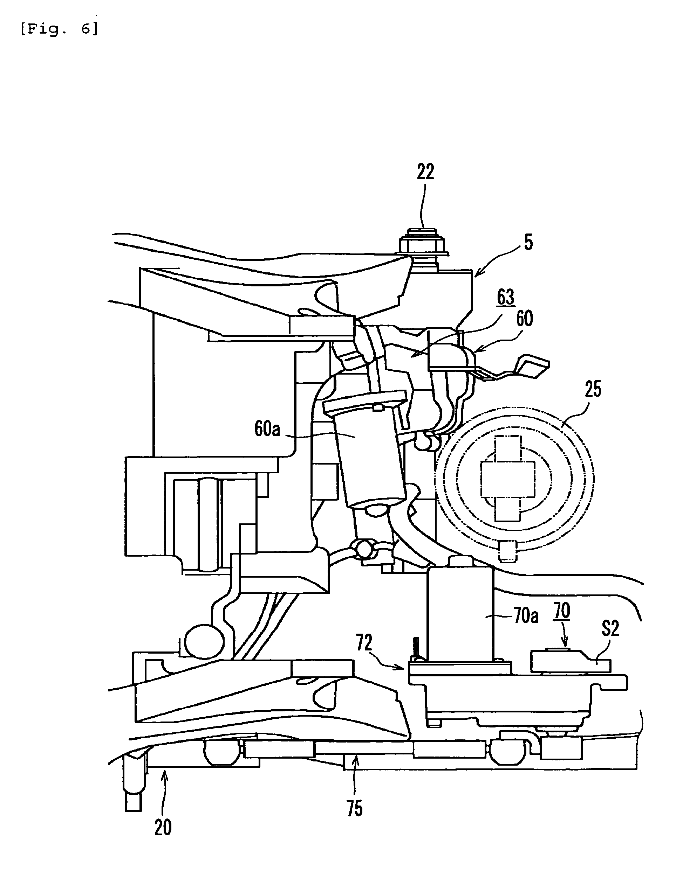

As shown in Figs. 2 and 6, the shift actuator 70 is integrated with a shift-position sensor S3 (see Fig. 6), which are constructed as a shift control unit 72. As shown in Fig. 2, a mounting bracket 73 is fixed to the backstay 7. The shift control unit 72 is mounted such that the shift actuator 70 is fixed to the mounting bracket 73 with tightening members 74 such as bolts. Thus the shift control unit 72 is disposed opposite to the transmission 40 with the main frame 4 therebetween, as viewed from the side, and the shift actuator 70 is located behind the main frame 4.

The shift mechanism 43 and the shift actuator 70 are joined together with a shift-power transmission member. The shift-power transmission member of this embodiment is a shift rod 75. The shift rod 75 crosses the body frame 2, as viewed from the side.

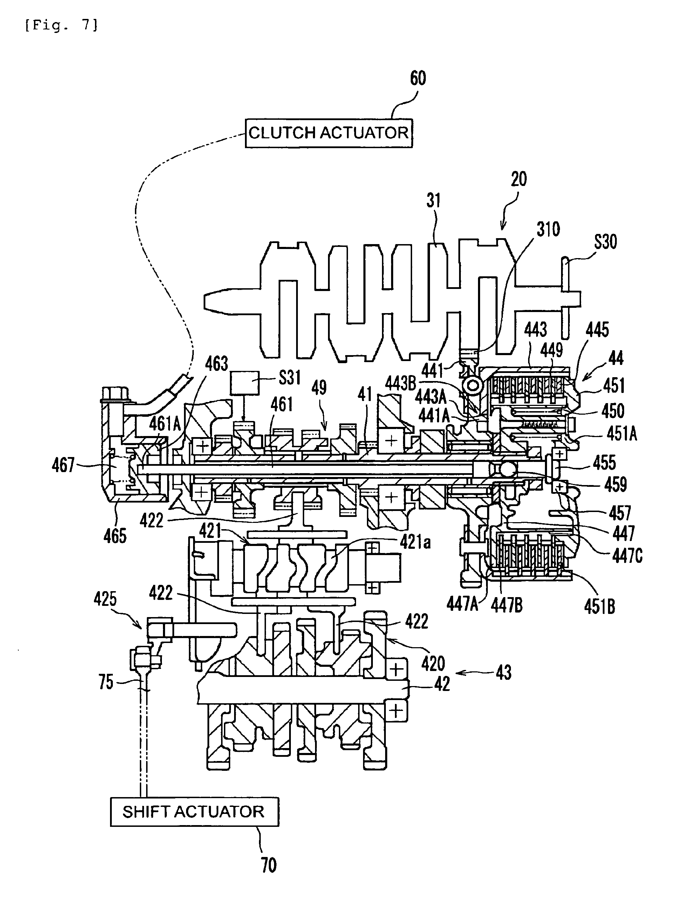

The detailed structure of the clutch mechanism 44 will be described. Fig. 7 is a sectional view of the interior structure of the engine 20.

The clutch mechanism 44 of this embodiment is, for example, a multiple-disc friction clutch, which includes a clutch housing 443; a plurality of friction discs 445 integrated with the clutch housing 443; a clutch boss 447; and a plurality of clutch plates 449 integrated with the clutch boss 447. The crankshaft 31 of the engine 20 integrally supports a gear 310. The main shaft 41 supports a gear 441 that is rotatable about the main shaft 41 and in engagement with the gear 310. The clutch housing 443 is integrated with the gear 441. To the clutch housing 443, torque is transmitted from the crankshaft 31 via the gear 441. To the clutch boss 447, torque is transmitted from the clutch housing 443 by the friction generated between the plurality of friction discs 445 and the plurality of clutch plates 449.

The gear 441 is supported rotatably at a first end of the main shaft 41 (on the right in Fig. 7). The clutch housing 443 is integrated with the boss of the gear 441. Thus, it can rotate around the main shaft 41 with limitation to the movement along the axis of the main shaft 41. The clutch boss 447 is integrated with the first end of the main shaft 41 (closer to the end relative to the gear 441).

The clutch boss 447 is disposed inside the cylindrical clutch housing 443. The rotation centers of the gear 441, the clutch housing 443, the clutch boss 447, and the main shaft 41 are the same, being on concentric circles.

A cylindrical engaging projection 441A is provided on the boss of the gear 441. A engaging portion 443B having an engaging hole 443A that is to be fitted on the engaging projection 441A is provided at a first end of the cylindrical clutch housing 443 (on the left in Fig. 7). The clutch housing 443 is fixed to the gear 441 by the engaging projection 441A fitted in the engagement hole 443A.

The friction discs 445 are each a ring-shaped thin plate. The outer rim of the friction disc 445 is supported by the inner circumference of the cylindrical clutch housing 443 such that the plane of the friction disc 445 is substantially perpendicular to the axis of the main shaft 41. This allows the friction discs 445 to move slightly along the rotation axis of the main shaft 41 relative to the clutch housing 443, and limits the relative rotation of the clutch housing 443 in the rotating direction of the main shaft 41.

The planes of the friction discs 445 have a specified clearance therebetween (slightly larger than the thickness of the clutch plate 449).

The clutch boss 447 is cylindrical, and has, at a first end of the clutch boss 447 (on the left in Fig. 7), a circular flange 447A whose outside diameter is substantially equal to that of the clutch plate 449. Around the outer circumference of the cylinder of the clutch boss 447, the clutch plates 449 are supported. This allows the clutch plates 449 to move slightly along the axis of the main shaft 41 relative to the clutch boss 447, and limits the relative rotation of the clutch boss 447 in the rotating direction of the main shaft 41.

The clutch boss 447 is fixed to the first end of the main shaft 41 (on the right in Fig. 7) such that the flange 447A is located on the side of the clutch housing 443 adjacent to the engaging portion 443B.

The clutch plates 449 are each a ring-shaped thin plate. The inner rim of the clutch plate 449 is supported by the outer circumference of the cylindrical clutch boss 447 such that the plane of the clutch plate 449 is substantially perpendicular to the rotation axis of the main shaft 41.

The planes of the clutch plates 449 have a specified clearance therebetween (slightly larger than the thickness of the friction disc 445).

The outside diameter of the clutch plate 449 is slightly smaller than the inside diameter of the cylindrical clutch housing 443. The inside diameter of the friction disc 445 is slightly larger than the outside diameter of the cylindrical clutch boss 447. The friction discs 445 and the clutch plates 449 are arranged alternately along the axis of the main shaft 41. Between each of the friction discs 445 and each of the clutch plates 449, slight clearance is present along the axis of the main shaft 41.

There is a pressure section 447B constructed of the flanges 447A of the clutch boss 447 on the side of the clutch housing 443 adjacent to the engaging portion 443B (on the left in Fig. 7), axially outside the alternate friction discs 445 and clutch plates 449 on the main shaft 41. The pressure section 447B holds the friction discs 445 and the clutch plates 449 together with a pressure plate 451 along the rotation axis of the main shaft 41 to generate friction between each friction disc 445 and each clutch plate 449.

The cylindrical clutch boss 447 has a plurality of cylindrical guides 447C integrated therewith and extending along the axis of the main shaft 41. The pressure plate 451 includes a plurality of guides 451A that is in engagement with the guides 447C. The pressure plate 451 can move relative to and rotate simultaneously with the clutch boss 447 by the guides 447C and the guides 451A, along the axis of the main shaft 41. The pressure plate 451 is driven and controlled by the clutch actuator 60. The clutch actuator 60 will be described later with reference to the drawings.

The pressure plate 451 has a planer pressure section 451B. The pressure section 451B is substantially parallel with the planes of the friction discs 445 and the clutch plates 449.

The clutch mechanism 44 includes a plurality of springs 450 such that they surround the cylindrical guides 447C, respectively. The springs 450 bias the pressure plate 451 to the left in Fig. 7. In other words, the springs 450 bias the pressure plate 451 in the direction in which the pressure section 451B of the pressure plate 451 comes close to the pressure section 447B of the clutch boss 447.

The pressure plate 451 is in rotatable engagement with a first end of a push rod 455 (on the right in Fig. 7) in the center thereof, for example, via a deep-groove ball bearing 457. A second end of the push rod 455 (on the left in Fig. 7) is in engagement with the inside of the first end of the cylindrical main shaft 41. Inside the cylindrical main shaft 41, a spherical ball 459 is provided next to the second end (the left end) of the push rod 455, and a push rod 461 is provided next to the ball 459.

A first end (the left end) 461A of the push rod 461 projects from a second end of the cylindrical main shaft 41. The first end 461A is integrated with a piston 463. The piston 463 is guided by a cylinder body 465 to slide freely along the axis of the main shaft 41.

When hydraulic fluid that is compressed fluid is supplied into a space 467 surrounded by the piston 463 and the cylinder body 465, the piston 463 is pushed to the right in Fig. 7. Thus the piston 463 moves the pressure plate 451 to the right in Fig. 7 via the push rod 461, the ball 459, the push rod 455, and the deep-groove ball bearing 457. When the pressure plate 451 is pushed to the right in Fig. 7 in this way, the pressure section 451B of the pressure plate 451 is separated from the friction discs 445, so that the clutch mechanism 44 is brought out of engagement.

When the clutch mechanism 44 is brought into engagement, the pressure plate 451 is biased by the springs 450 toward the flange 447A of the clutch boss 447 (to the left in Fig. 7). Thus, friction is generated between the friction discs 445 and the clutch plates 449 by the pressure section 447B of the clutch boss 447 and the pressure section 451B of the pressure plate 451, thus allowing transmission of torque from the clutch housing 443 to the clutch boss 447.

On the other hand, with the clutch mechanism 44 out of engagement, the pressure plate 451 is moved by the push rod 455 to the right in Fig. 7. Thus the pressure section 451B of the pressure plate 451 is separated from the friction disc 445 that is located closest to the pressure section 451B of the pressure plate 451 (the rightmost friction disc 445 in Fig. 7).

In this state, the friction discs 445 and the clutch plates 449 are not pushed, and so have slight clearance therebetween. Accordingly, friction capable of transmitting torque is not generated between the friction discs 445 and the clutch plates 449.

Thus the pressure plate 451 is moved to one end or the other end along the axis of the main shaft 41 depending on the driving force of the clutch actuator 60 and the biasing force of the springs 450. In response to the movement, the clutch mechanism 44 is brought into or out of engagement.

Referring to Fig. 7, the detailed structure of the shift mechanism 43 will be described.

The engine 20 has an engine speed sensor S30 at the end of the crankshaft 31. The crankshaft 31 is joined to the main shaft 41 via the multiple-disc clutch mechanism 44. To the main shaft 41, the multiple-step speed change gear 49 and a main-shaft speed sensor S31 are mounted. The speed change gear 49 on the main shaft 41 is in engagement with a corresponding speed change gear 420 mounted on the drive shaft 42 (out of engagement in the figure). One or both of the speed change gear 49 and the speed change gear 420 except a selected pair of speed change gears are mounted to the main shaft 41 or the drive shaft 42 in a tickover condition (at idle). Thus the rotation is transmitted from the main shaft 41 to the drive shaft 42 only via the selected pair of speed change gears.

The gear change operation of changing the change gear ratio by selecting the speed change gear 49 and the speed change gear 420 is performed by a shift cam 421 serving as a shift input shaft. The shift cam 421 has multiple cam grooves 421a, to which shift forks 422 are mounted. The shift forks 422 are in engagement with a specified speed change gear 49 on the main shaft 41 and a specified speed change gear 420 on the drive shaft 42. When the shift cam 421 rotates, the shift forks 422 move axially along the cam groove 421a. Then only a pair of the speed change gear 49 and the speed change gear 420 in the position corresponding to the rotation angle of the shift cam 421 is fixed to the main shaft 41 and the drive shaft 42 by a spline, respectively. The position of the speed change gears is thus determined. Accordingly, transmission of the rotation between the main shaft 41 and the drive shaft 42 is executed at a specified speed change ratio via the speed change gear 49 and the speed change gear 420.

The shift mechanism 43 moves the shift rod 75 back and forth by the operation of the shift actuator 70, and rotates the shift cam 421 by a specified angle via a shift link mechanism 425. Thus, the shift forks 422 moves axially by a specified angle along the cam grooves 421a to fix a pair of the multiple-step speed change gear 49 and the speed change gear 420 to the main shaft 41 and the drive shaft 42 in order, respectively, thereby transmitting the rotation at a speed reducing ratio.

The more detailed structure of the shift actuator 70 will be described. The shift actuator 70 may be driven by hydraulic fluid or electricity.

Fig. 8 is a schematic diagram of the shift actuator 70, the shift rod 75, and the shift mechanism 43. As shown in Fig. 8, the shift actuator 70 of this embodiment rotates a shift motor 70a according to a signal from an engine controller 95. A gear 70c on a motor shaft 70b is rotated by the rotation of the shift motor 70a. With the rotation of the gear 70c, a reduction gear 70d is rotated to rotate a drive shaft 70g.

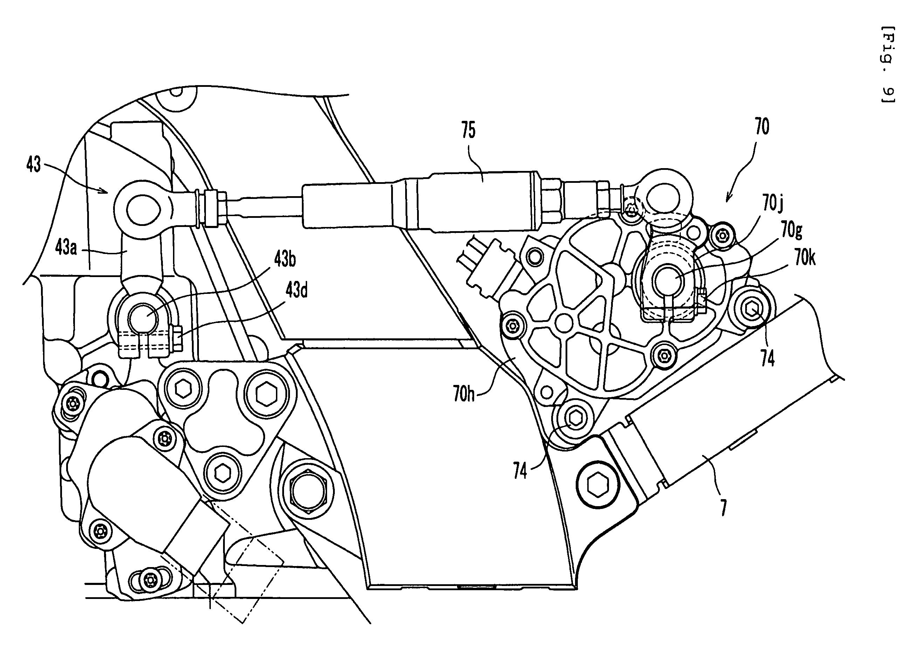

Fig. 9 is a side view of the shift actuator 70, the shift rod 75, and the shift mechanism 43. As shown in Fig. 9, a housing 70h of the shift actuator 70 is secured to the mounting bracket 73 (see Fig. 2) fixed to the backstay 7 (see also Fig. 2) by the tightening members 74.

The drive shaft 70g (see also Fig. 8) has a control lever 70j. The control lever 70j connects to a shift-actuator-side connecting portion of the shift rod 75 with a bolt (not shown). The connecting portion of the shift rod 75 adjacent to the shift actuator 70 can rotate about the control lever 70j. The control lever 70j is secured to the drive shaft 70g with a bolt 70k. Thus, the control lever 70j cannot be moved along the axis of the drive shaft 70g.

The drive shaft 70g has a shift-position sensor S2 (see Fig. 8). The shift-position sensor S2 is disposed at the end of the drive shaft 70g (the end at the back of the plane of Fig. 9), and is secured to the housing 70h with a mounting bolt (not shown). The shift-position sensor S2 obtains positional information from the rotation of the drive shaft 70g, and sends the positional information to the engine controller 95. The engine controller 95 controls the shift motor 70a according to the positional information.

The connecting portion of the shift rod 75 adjacent to the shift mechanism 43 is connected to a shift control lever 43a of the shift mechanism 43 with a bolt (not shown). The shift-mechanism-side connecting portion can rotate about the shift control lever 43a. The shift control lever 43a is secured to a shift control shaft 43b with a bolt 43d. This prevents the shift control lever 43a from moving along the axis of the shift control shaft 43b.

When the shift rod 75 moves, then the shift control lever 43a is moved. The movement of the shift control lever 43a is a rotary motion around the shift control shaft 43b splined to the shift control lever 43a. Thus, the shift control shaft 43b is rotated with the movement of the shift control lever 43a.

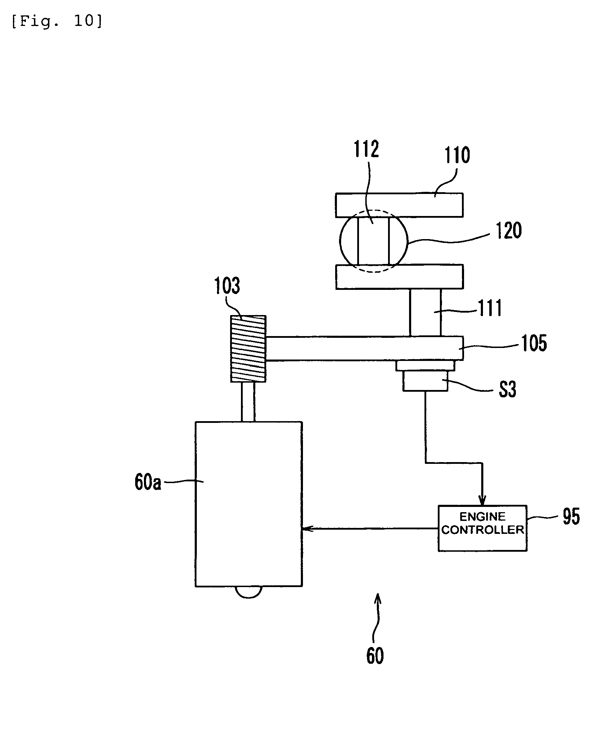

The more detailed structure of the clutch actuator 60 will now be described. Fig. 10 is a schematic diagram of the clutch actuator 60. As shown in Fig. 10, the clutch actuator 60 according to the embodiment is arranged such that a clutch motor 60a runs in response to the signal from the engine controller 95, with which a worm shaft 103 rotates. The rotation of the worm shaft 103 is transferred to a worm wheel 105 in engagement with the worm shaft 103. The worm wheel 105 is fixed to a crankshaft 110 coaxially with the crank shaft 111 of the crankshaft 110. A crankpin 112 of the crankshaft 110 is fixed to an output rod 120. Thus, the rotary motion of the crankshaft 110 is converted to the reciprocating motion of the output rod 120 (a motion forward and backward of the plane of Fig. 10). A clutch-position sensor S3 is disposed at the end of a crank shaft 111 of the crankshaft 110. The clutch-position sensor S3 measures the rotation angle of the worm wheel 105. The clutch-position sensor S3 finds the stroke of the output rod 120 from the rotation angle of the worm wheel 105, from which it determines the clutch position of the clutch mechanism 44. The clutch-position sensor S3 corresponds to the rotation-angle sensor of the present embodiment.

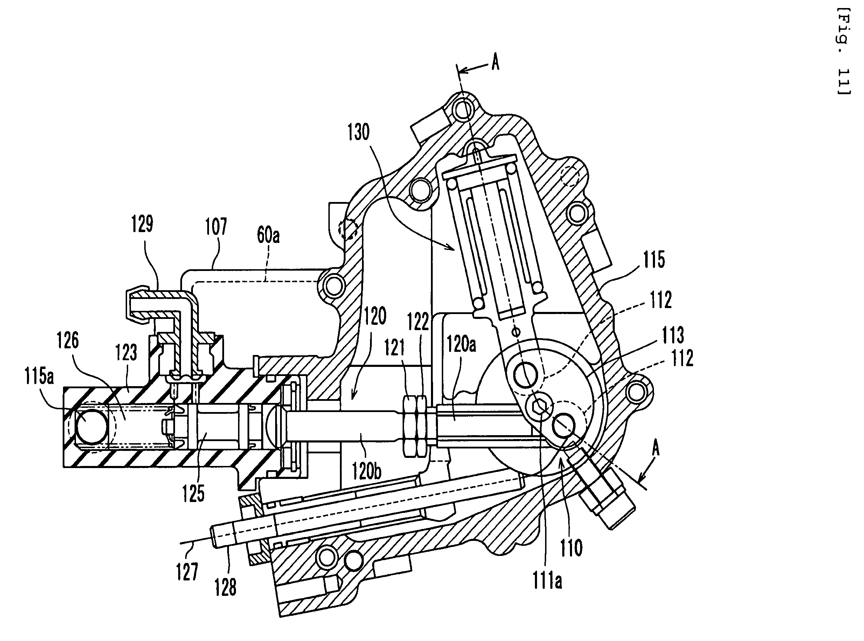

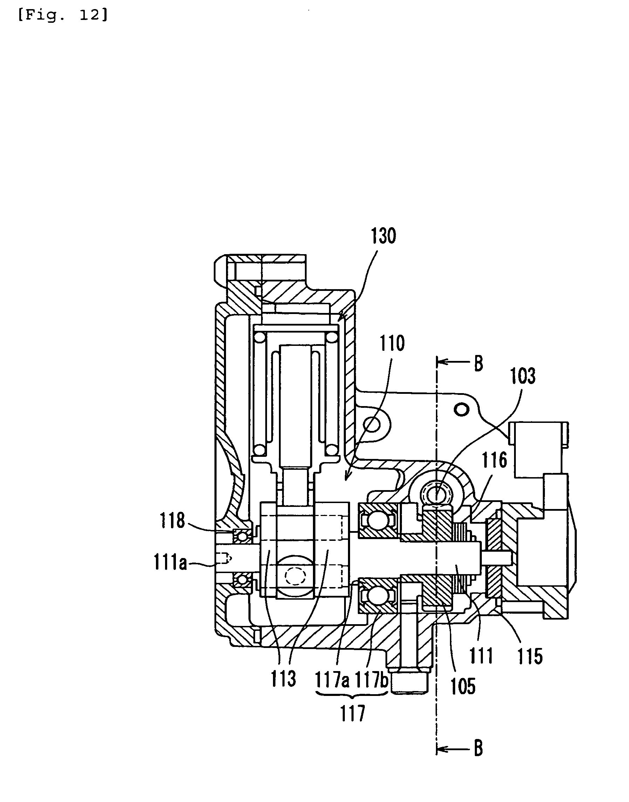

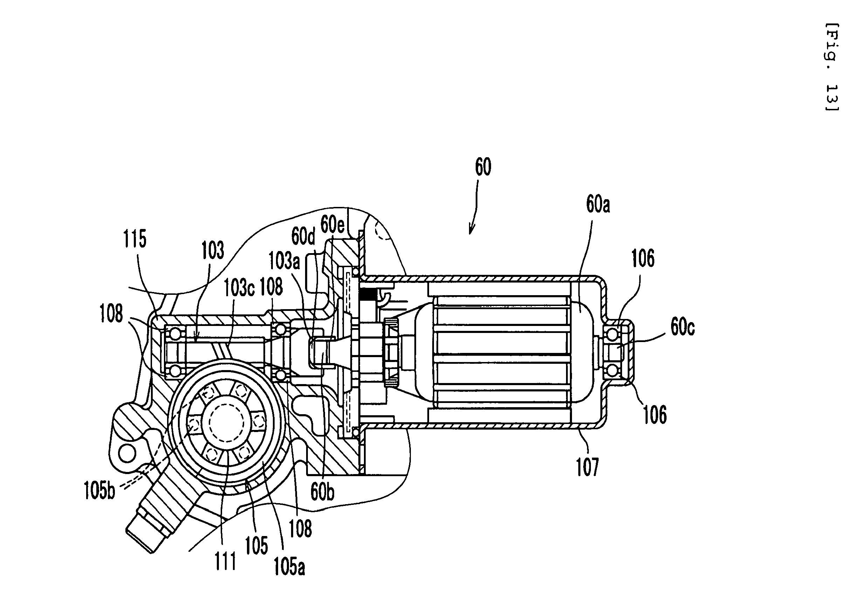

Fig. 11 is a sectional view of the clutch actuator 60; Fig. 12 is a cross section taken along line A-A of Fig. 11; and Fig. 13 is a cross section taken along line B-B of Fig. 12. As shown in Fig. 13, the clutch motor 60a includes a motor shaft 60b. The motor shaft 60b passes through the center of the clutch motor 60a. The rear end (the right end in the drawing) 60c of the motor shaft 60b is supported by a motor bearing 106. The outer ring of the motor bearing 106 is fixed to a motor case 107 that accommodates the clutch motor 60a. The motor bearing 106 is a ball bearing.

The front end (the left end in the drawing) 60d of the motor shaft 60b has a plurality of spline teeth 60e. The front end 60d is fitted in a spline hole 103a of the worm shaft 103 to connect the motor shaft 60b and the worm shaft 103 together through spline joint.

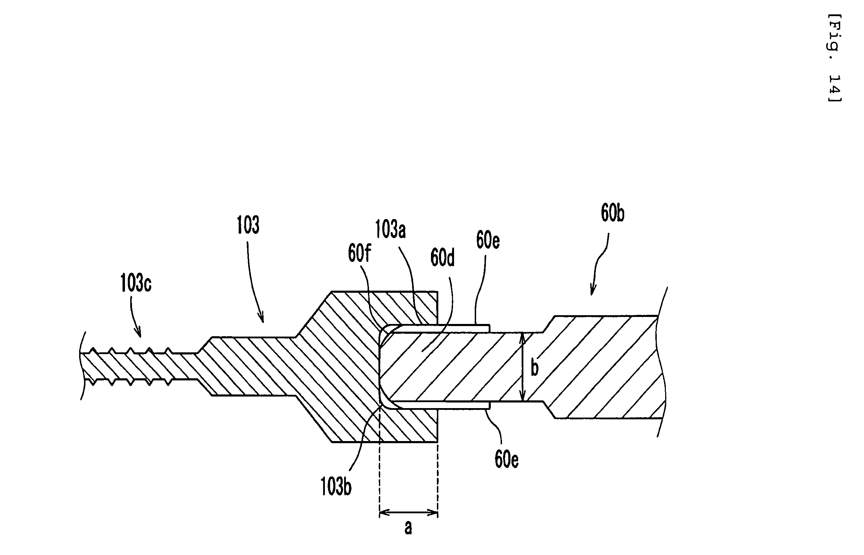

Fig. 14 is an enlarged sectional view of the engaged portion of the motor shaft 60b and the worm shaft 103. As shown in Fig. 14, the front end 60d of the motor shaft 60b has the plurality of spline teeth 60e, while the spline hole 103e of the worm shaft 103 has a spline groove to engage with the spline teeth 60e. The front end 60d of the motor shaft 60b is fitted in the spline hole 103a of the worm shaft 103 into spline joint.

The front end 60d of the motor shaft 60b is chamfered to form a curved portion 60f. The curved portion 60f is formed from the bottom of the spline teeth 60e across the shaft center of the motor shaft 60b. The chamfered front end 60d allows the worm shaft 103 to absorb the vibration of the shaft center of the motor shaft 60b, even if generated during the operation of the clutch motor 60a. Thus, the transmission of the vibration to the worm shaft 103 can be prevented. The bottom of the spline hole 103a of the worm shaft 103 is also chamfered to form a curved surface 103b.

The depth a of the spline hole 103a of the worm shaft 103 is smaller than the diameter b of the front end 60d of the motor shaft 60b, that is, a < b. The setting of the portion where the motor shaft 60b is fitted in the worm shaft 103 short enables the worm shaft 103 to appropriately absorb the vibration of the shaft center during the rotation of the motor shaft 60b.

Referring to Fig. 13, the worm shaft 103 has a thread portion 103c (see also Fig. 14). The worm shaft 103 is supported by bearings 108 disposed on the front (left in the drawing) and on the rear (right in the drawing) of the thread portion 103c. The two bearings 108 are ball bearings. The outer ring of each bearing 108 is supported by the housing 115 of the clutch actuator 60. The supporting of the front and rear of the thread portion 103c by the bearings 108 prevent the vibration of the worm shaft 103 during rotation to stabilize the rotation.

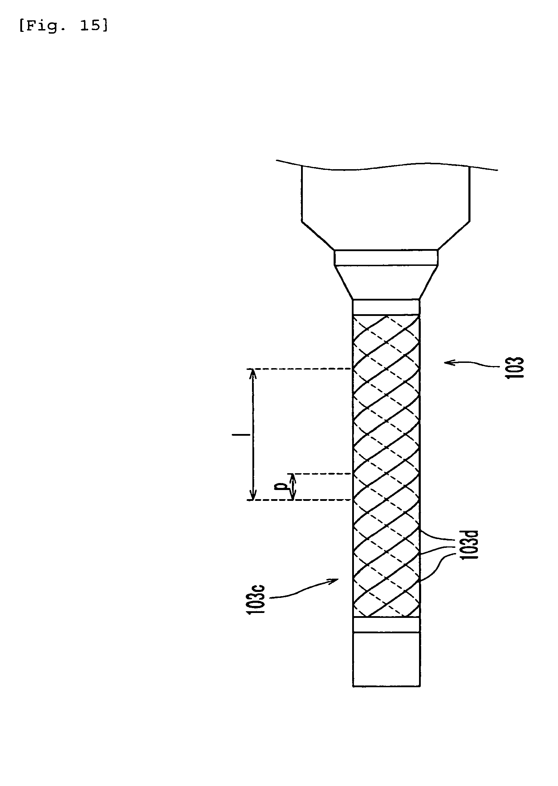

Fig. 15 is an enlarged view of the portion where the thread portion 103c of the worm shaft 103 is formed. As shown in Fig. 15, the thread portion 103c of the worm shaft 103 has a plurality of threads 103d. Fig. 15 is an explanatory diagram of the number of threads of the thread portion 103c, not showing the correct shape of the threads 103d on the circumferential surface of the thread portion 103c.

Here, the distance, lead I, that the worm shaft 103 travels axially per rotation can be written as I = n × p, where p is the distance, or pitch, between adjacent threads 103d and n is the number of the threads of the thread portion 103c. As shown in Fig. 15, the number n of the threads of the thread portion 103c in this embodiment is four. Setting the number of the threads of the thread portion 103c of the worm shaft 103 at two or more (multiple threads) enables the lead angle of the worm wheel 105 to be increased. The axle ratio of the worm gear (the axle ratio of the worm shaft 103 to the worm wheel 105) can therefore be reduced, thus improving the responsiveness of the output rod 120. This improves the responsiveness of the apply and release of the clutch mechanism 44. Since the multiple thread screw has higher transmission efficiency than a single thread screw, the rotary motion of the clutch motor 60a can be converted efficiently to the reciprocating motion of the output rod 120 (see Figs. 10 and 11). As a result, the output loss of the clutch motor 60a can be decreased, improving the responsiveness of the apply and release of the clutch mechanism 44.

As shown in Fig. 13, the thread portion 103c of the worm shaft 103 is in engagement with the gear teeth 105a of the worm wheel 105. The worm wheel 105 has substantially doughnut shape, around which the gear teeth 105a are formed. At the shaft center of the worm wheel 105, a torque limiter 105b is provided. The torque limiter 105b includes a transfer plate (not shown) splined to the crank shaft 111 of the crankshaft 110 (see Fig. 12) to rotate with the crank shaft 111 and an inner clutch (not shown) disposed around the outer rim of the transfer plate. When the driving force applied to the worm wheel 105 reaches a predetermined value or more, slide occurs between the transfer plate and the inner clutch to prevent the transfer of an excessive driving force to the crank shaft 111. The present teaching may not have the torque limiter 105b, but the worm wheel 105 may be integrated with the crankshaft 110. In this embodiment, the rotation angle of the worm wheel 105 at the apply and release of the clutch mechanism 44 is larger than 90°. In other words, the rotation angle (the maximum rotation angle) of the worm wheel 105 when the worm wheel 105 is rotated until the clutch mechanism 44 is brought into complete disengagement at the disengaging operation of the clutch mechanism 44 is larger than 90°.

Referring to Fig. 12, the worm wheel 105 is fixed to the end of the crank shaft 111 of the crankshaft 110 (the right end in Fig. 12). The worm wheel 105 is fixed to the crank shaft 111 coaxially therewith and in parallel with crank arms 113 of the crankshaft 110. The side of the worm wheel 105 is perpendicular to the crank shaft 111.

The opposite ends of the crank shaft 111 of the crankshaft 110 are rotatably fixed to the housing 115. A Belleville spring 116 is disposed on the crank shaft 111 and between the worm wheel 105 and the housing 115.

The crank shaft 111 is supported by two bearings 117 and 118. The outer rings of the two bearings 117 and 118 are secured to the housing 115. The bearings 117 and 118 are ball bearings. The bearing 117 of the two bearings 117 and 118 is disposed between the worm wheel 105 and the right crank arm 113. The bearing 117 is a double-sealed bearing which is sealed with an inner ring 117a and an outer ring 117b, and which contains bearing grease therebetween. Between the worm shaft 103 and the worm wheel 105, grease (molybdenum grease or the like) is provided. The grease may have a bad influence on the bearing 117 adjacent to the worm wheel 105. Specifically, the adhesion of the grease to the interior of the bearing 117 may degrade the performance of the bearing 117. Accordingly, the bearing 117 of the embodiment is a double-sealed bearing containing bearing grease. This prevents the entry of the grease between the worm shaft 103 and the worm wheel 105 into the bearing 117 to exert a bad influence.

The bearing 118 is disposed on the left of the left crank arm 113. Thus, the two crank arms 113 are sandwiched between the bearing 117 and the bearing 118. The disposing of the two bearings 117 and 118 so as to sandwich the two crank arms 113 stabilizes the rotation of the crank shaft 111.

The bearing 117 adjacent to the worm wheel 105 is a ball bearing larger than the bearing 118 apart from the worm wheel 105. Since the bearing 117 adjacent to the worm wheel 105 receives a relatively large radial force, it is preferable to use such a large ball bearing.

Referring to Fig. 11, the output rod 120 is fixed to the crankpin 112 at the lower part of the crankshaft 110. The output rod 120 includes a base 120a having a screw hole and a rod 120b having a screw. The screw of the rod 120b is screwed in the screw hole of the base 120a. On the screw of the rod 120b, a retaining nut 121 and a nut 122 are screwed.

According to the embodiment, this arrangement allows the length of the output rod 120 to be adjusted. In other words, the length of the output rod 120 can be changed by rotating the rod 120b about the base 120a. After the length is changed, the retaining nut 121 and the nut 122 are tightened on the base 120a to thereby fix the output rod 120.

A piston 125 is disposed at the end of the rod 120b of the output rod 120. The piston 125 is slidable along the axis of the output rod 120 (to the right and left in the drawing) in the cylinder 123. The left part of the piston 125 in the cylinder 123 forms an oil chamber 126 filled with hydraulic fluid. The oil chamber 126 communicates with a reserve tank (not shown) through a tank joint section 129.

One end of an assist spring 130 is fixed to the crankpin 112 at the upper part of the crankshaft 110. The other end of the assist spring 130 is fixed to the housing 115. The assist spring 130 assists the rotation of the crank shaft 111 of the crankshaft 110 to assist the stroke of the output rod 120.

To bring the clutch mechanism 44 (see Fig. 7) from engagement into disengagement, the clutch motor 60a is driven, with which the worm shaft 103 rotates. The rotation of the worm shaft 103 is transferred to the worm wheel 105 in engagement with the worm shaft 103 to rotate it. When the worm wheel 105 rotates, the crank shaft 111 of the crankshaft 110 to which the worm wheel 105 is fixed also rotates. The rotary motion of the worm wheel 105 is converted to the linear motion of the output rod 120 by the crankshaft 110, and thus the output rod 120 moves to the left in Fig. 11.

Referring to Fig. 11, the output rod 120 moving linearly to the left pushes the piston 125 to thereby generate hydraulic pressure in the oil chamber 126. The generated hydraulic pressure is transferred from a hydraulic oil outlet 115a of the housing 115 through an oil hose (not shown) into a piston 463 (see Fig. 7). The hydraulic pressure drives push rods 461 and 455 (see Fig. 7) to bring the clutch mechanism 44 out of engagement. The linear motion of the output rod 120 is assisted by the assist spring 130.

According to the embodiment, the clutch mechanism 44 can be disengaged either automatically or manually by driving the clutch motor 60a. As shown in Fig. 11, a guide cylinder 128 for a clutch wire 127 is disposed below the output rod 120 in the housing 115. One end of the clutch wire 127 is fixed to the lower crankpin 112. The clutch wire 127 is directed to the lower left in the drawing by the guide cylinder 128. When the clutch wire 127 is pulled along the length of the guide cylinder 128 (to the lower left in Fig. 11) by operating a clutch lever (not shown) by hand, the crankshaft 110 rotates to move the output rod 120 to the left in Fig. 11.

As shown in Fig. 11, the clutch motor 60a connected to the worm shaft 103 and the output rod 120 fixed to the crankpin 112 extend substantially in the same direction. However, it is necessary to dispose the clutch motor 60a and the output rod 120 apart from each other to some extent so as to prevent the interference therebetween. In this embodiment, as shown in Fig. 12, the worm wheel 105 is fixed to the end of the crank shaft 111 of the crankshaft 110, separately from the crank arms 113. The worm wheel 105 is disposed in parallel with the crank arms 113 and coaxially with the crank shaft 111. Thus the crank shaft 111 can be short even if the clutch motor 60a adjacent to the worm wheel 105 and the output rod 120 fixed to the crankpin 112 are disposed so as not to interfere with each other. This can prevent increases in the size and weight of the crankshaft 110, thus preventing increases in the size and weight of the clutch actuator 60 itself.

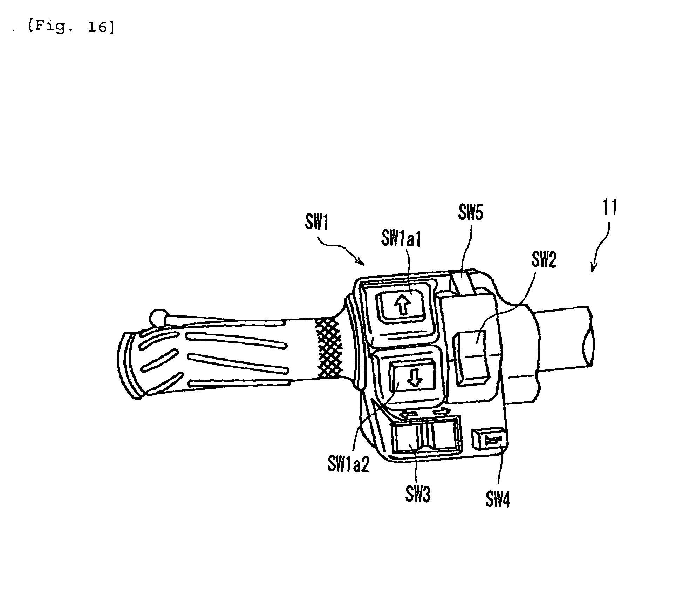

The system of the automated manual transmission system will be described in detail below. Referring to Fig. 16, a shift switch SW1, for example, is disposed at the left grip of the steering handle 11. The shift switch SW1 is composed of, for example, a shift-up switch SW1a1 and a shift-down switch SW1a2. The shift switch SW1 is for shifting the change gear from the first to the highest gears (e.g., the sixth gear) as appropriate by the control of the rider. At the left grip, there are also a selector switch SW2, an indicator switch SW3, a horn switch SW4, and a light switch SW5. The selector switch SW2 is for switching the gear shift between a semiautomatic mode and a full automatic mode.

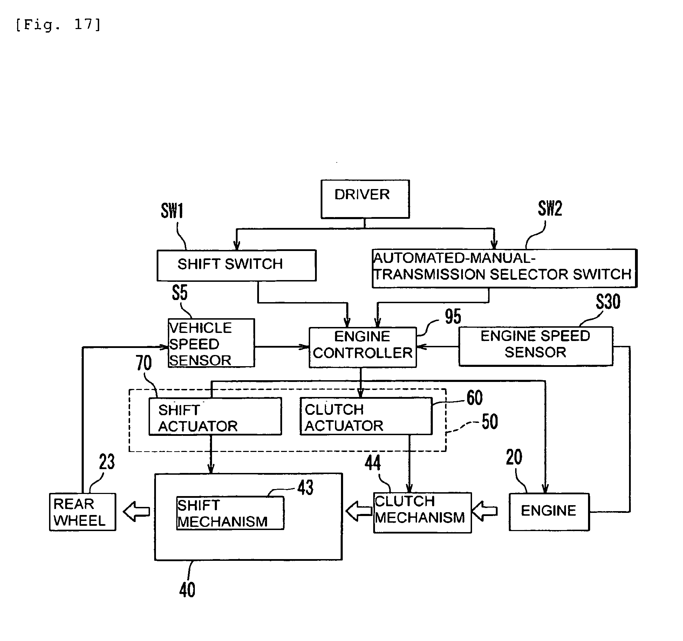

Referring to Fig. 17, both the shift mechanism 43 and the clutch mechanism 44 are switched by the automated manual transmission system 50. In addition to the shift-position sensor S2 (see Fig. 6) of the shift actuator 70, the motorcycle 1 includes a clutch-position sensor S3 (see Fig. 10) for the clutch actuator 60, an engine speed sensor S30, a vehicle speed sensor S5, etc.

The engine controller 95 controls the driving of the clutch actuator 60 and the shift actuator 70 according to the data of the sensors and the instruction of the shift switch SW1. Specifically, a series of shift operation, the disengagement of the clutch mechanism 44, the switching of the speed change gear of the transmission 40, and the engagement of the clutch mechanism 44, is automatically performed according to a predetermined program stored in advance in the engine controller 95 through an operating circuit etc.

As has been described, the clutch actuator 60 according to the embodiment allows the lead angle of the worm wheel 105 to be increased, because the thread portion 103c of the worm shaft 103 has multiple threads (four threads). This decreases the axle ratio of the worm gear to improve the responsiveness of the output rod 120. As a result, the responsiveness of the clutch apply and release can be improved. The decreased axle ratio of the worm gear decreases the worm wheel 105 in size (diameter), thus miniaturizing the clutch actuator 60.

In case of the failure of the clutch motor 60a, it is necessary to return the clutch motor 60a stopped in the middle of operation to neutral, so that the worm shaft 103 sometimes needs to be rotated by hand. If the number of the threads of the thread portion 103c of the worm shaft 103 is two or more (preferably, three or more), when the worm wheel 105 (or the crankshaft 110 connected to the worm wheel 105) is rotated by hand, the worm shaft 103 also rotates with the rotation of the worm wheel 105. Accordingly, setting the number of the threads of the thread portion 103c of the worm shaft 103 at three or more enables the worm shaft 103 to rotate by moving the worm wheel 105, the crank shaft 111 or the like on the reduction side without directly moving the worm shaft 103. Thus, the output rod 120 can easily be stroked with less control input by moving the worm wheel 105, the crank shaft 111 or the like in comparison with the case in which the worm shaft 103 is rotated directly.

Specifically, for example, the crank shaft 111 is operated by rotating a tool such as a wrench inserted into a hexagonal hole 111a (see Figs. 11 and 12) of the crank shaft 111. This facilitating of stroke of the output rod 120 by operating the crank shaft 111 with a tool such as a wrench makes it easy to perform the work necessary for enabling the motorcycle 10 to be moved by hand in a failure of the clutch motor 60a, the work of mounting the clutch actuator 60, and the word of degassing the hydraulic oil in the oil chamber 126 (see Fig. 11) of the clutch actuator 60.

Since the multiple thread screw has higher gear transmission efficiency than a single thread screw, the reciprocating motion of the output rod 120 rapidly follows the rotary motion of the clutch motor 60a. This can improve the responsiveness of clutch apply and release. Preferably, the number of the threads of the thread portion 103c is three or more in view of increasing the lead angle of the worm wheel 105 and the gear transmission efficiency.

The embodiment is equipped with the clutch-position sensor S3 for measuring the rotation angle of the worm wheel 105 and in which the rotation angle of the worm wheel 105 at the apply and release of the clutch mechanism 44 is larger than 90°. The large rotation angle of the worm wheel 105 ensures sufficient stroke of the output rod 120 even with a crank of a small radius. Thus, the clutch actuator 60 can be miniaturized. The increase in the rotation angle of the worm wheel 105 at the apply and release of the clutch mechanism 44 improves the resolution of the stroke of the output rod 120 determined from the result of the clutch-position sensor S3, thus improving the resolution of the clutch position of the clutch mechanism 44 determined from the stroke of the output rod 120. Therefore, the responsiveness of the apply and release and reliability of the clutch mechanism 44 can be improved.

As has been described above, the present teaching is useful for a clutch actuator.

The clutch actuator allows the lead angle of the worm wheel to be increased, because the thread portion of the worm shaft has multiple threads. This can decrease the axle ratio of the worm gear to improve the responsiveness of the output rod, thereby improving the responsiveness of the clutch on-off operation. Since the multiple thread screw has higher gear transmission efficiency than a single thread screw, the reciprocating motion of the output rod rapidly follows the rotary motion of the motor. Therefore, the responsiveness of the clutch apply and release can be improved.

According to the present teaching, the responsiveness of the clutch apply and release of an actuator can be improved.

According to a particularly preferred aspect, the description discloses in order to provide a clutch actuator in which the responsiveness of clutch work can be improved, an embodiment including a motor shaft 60b of a clutch motor 60a and a worm shaft 103 constituting a clutch actuator 60 are connected by spline joint, wherein the rotary motion of the worm shaft 103 is transferred to a worm wheel 105 in engagement with the worm shaft 103, wherein the end of the worm shaft 103 has a thread portion 103c, and wherein the thread portion 103c is a multiple thread (four-thread) screw.

## Claims

1. Clutch actuator (60), in particular for a saddle-type vehicle, comprising
- a clutch motor (60a);
- a worm shaft (103) having a thread portion (103c) and being rotatable by the clutch motor (60a);
- a worm wheel (105) in engagement with the thread portion (103c);
- an output rod (120) which is configured to engage and disengage a clutch mechanism (44) by axial reciprocating movement, whereby the clutch mechanism (44) interrupts transmission of rotation at switching of a speed change gear (49) ;
- and a crankshaft (110,111) having a crankpin (12) and crank arms (113) that converts the rotary motion of the worm wheel (105) to the reciprocating motion of the output rod (120), **characterised in that**
- the thread portion (103c) is a multiple thread screw,
- whereby said worm wheel (105) is disposed in parallel with the crank arms (113) of the crankshaft (110,111) and coaxially therewith, and
- whereby the worm shaft (103) and the output rod (120) fixed to the crankpin (112) extend substantially in the same direction.

2. Clutch actuator according to claim 1, wherein the rotation angle of the worm wheel (105) at the on-off operation of the clutch exceeds 90 degrees.

3. Clutch actuator according to claim 1 or 2, wherein the number (n) of threads of the thread portion (103c) is three or more.

4. Clutch actuator according to one of the claims 1 to 3, further comprising a rotation-angle sensor (S3) that measures the rotation angle of the worm wheel (105), and a controller (96) that controls the clutch motor (60a) on the basis of the result of the measurement of the rotation-angle sensor (S3).

5. Clutch actuator according to one of the claims 1 to 4, wherein the clutch motor (60a) comprises a motor shaft (60b), said motor shaft (60b) being in engagement with and being coaxially arranged with the worm shaft (103).

6. Clutch actuator according to claim 5, wherein the motor shaft (60b) and the worm shaft (103) are connected by a spline joint.

7. Clutch mechanism (44) comprising a clutch actuator according to one of the claims 1 to 6.

8. Engine unit comprising an engine and a clutch mechanism (44) according to claim 7.

9. Saddle-type vehicle comprising the engine unit according to claim 8.

## Patentansprüche

1. Kupplungsbetätiger (60), insbesondere für ein Fahrzeug vom Aufsitz- Typ, aufweisend
- einen Kupplungsmotor (60a);
- eine Schneckenwelle (103) mit einem Gewindeabschnitt (1 03c) und die durch den Kupplungsmotor (60a) drehbar ist;
- ein Scheckenrad (105) im Eingriff mit dem Gewindeabschnitt (1 03c);
- einen Ausgangsstab (120), der konfiguriert ist, eine Kupplungsvorrichtung (44) durch eine axial hin- und hergehende Bewegung in Eingriff zu bringen oder außer Eingriff zu bringen, wodurch die Kupplungsvorrichtung (44) die Rotationsübertragung beim Schalten eines Gangwechselrades (49) unterbricht;
- und eine Kurbelwelle (110, 111) mit einem Kurbelbolzen (12) und Kurbelarmen (113), die die Rotationsbewegung des Schneckenrades (105) in die hin- und hergehende Bewegung der Ausgangsstange (120) wandelt, **dadurch gekennzeichnet, dass**
- der Gewindeabschnitt (103c) eine Mehrgangschraube ist,
- wobei das Schneckenrad (105) parallel mit den Kurbelarmen (113) der Kurbelwelle (110, 111) und koaxial mit dieser angeordnet ist, und
- wobei sich die Schneckenwelle (103) und die Ausgangsstange (120), befestigt an dem Kurbelbolzen (112), im Wesentlichen in dieselbe Richtung erstrecken.

2. Kupplungsbetätiger nach Anspruch 1, wobei der Drehwinkel des Schneckenrades (105) für die Ein- Aus- Betätigung der Kupplung 90 Grad überschreitet.

3. Kupplungsbetätiger nach Anspruch 1 oder 2, wobei die Anzahl (n) der Gewindegänge des Gewindeabschnittes (1 03c) drei oder mehr beträgt.

4. Kupplungsbetätiger nach einem der Ansprüche 1 bis 3, außerdem aufweisend einen Drehwinkelsensor (33), der den Drehwinkel des Schneckenrades (105) misst, und eine Steuerung (96), die den Kupplungsmotor (60a) auf der Grundlage des Ergebnisses der Messung des Drehwinkelsensors (33) steuert.

5. Kupplungsbetätiger nach einem der Ansprüche 1 bis 4, wobei der Kupplungsmotor (60a) eine Motorwelle (60b) aufweist, die im Eingriff ist mit und die koaxial mit der Schneckenwelle (103) angeordnet ist.

6. Kupplungsbetätiger nach Anspruch 5, wobei die Motorwelle (60b) und die Schneckenwelle (103) durch eine Nut- Feder- Verbindung verbunden sind.

7. Kupplungsvorrichtung (44), aufweisend einen Kupplungsbetätiger nach einem der Ansprüche 1 bis 6.

8. Motoreinheit, aufweisend eine Brennkraftmaschine und eine Kupplungsvorrichtung (44) nach Anspruch 7.

9. Fahrzeug vom Aufsitz- Typ, aufweisend die Motoreinheit nach Anspruch 8.

## Revendications

1. Actionneur pour embrayage (60), en particulier pour un véhicule de type à deux roues, comprenant :
- un moteur d'embrayage (60a) ;
- une vis sans fin (103), comprenant une partie à filetage (103c) et étant susceptible de tourner au moyen du moteur d'embrayage (60a) ;
- une roue à denture hélicoïdale (105), s'engrenant avec la partie à filetage (103c) ;
- une tige de sortie (120), configurée pour venir en prise et hors de prise avec un mécanisme d'embrayage (44), grâce à un déplacement en va et vient axial, de manière que le mécanisme d'embrayage (44) interrompe la transmission de la rotation au moment de la commutation d'un mécanisme de changement de vitesse (49) ;
- et un vilebrequin (110, 111) comprenant un maneton de vilebrequin (112) et des bras de manivelle (113), convertissant le mouvement rotatif de la roue à denture hélicoïdale (105) en mouvement de va et vient de la tige de sortie (120), **caractérisé en ce que**
- la partie à filetage (103c) est une vis à filetage multiple,
- de manière que ladite roue à denture hélicoïdale (105) soit disposée en parallèle aux bras de manivelle (113) du vilebrequin (110, 111) et coaxialement à celui-ci, et
- de manière que la vis sans fin (103) et la tige de sortie (120), fixée au maneton de vilebrequin (112), s'étendent sensiblement dans la même direction.

2. Actionneur pour embrayage selon la revendication 1, dans lequel l'angle de rotation de la roue à denture hélicoïdale (105), au moment de la phase marche-arrêt de l'embrayage, est supérieur à 90 degrés.

3. Actionneur pour embrayage selon la revendication 1 ou 2, dans lequel le nombre (n) de filets de la partie à filetage (103c) est de trois ou plus.

4. Actionneur pour embrayage selon l'une des revendications 1 à 3, comprenant en outre un capteur d'angle de rotation (S3), mesurant l'angle de rotation de la roue à denture hélicoïdale (105), et un contrôleur (96), commandant le moteur d'embrayage (60a), d'après le résultat de la mesure du capteur d'angle de rotation (S3).

5. Actionneur pour embrayage selon l'une des revendications 1 à 4, dans lequel le moteur d'embrayage (60a) comprend un arbre de moteur (60b), ledit arbre de moteur (60b) étant en prise avec et agencé coaxialement à la vis sans fin (103).

6. Actionneur pour embrayage selon la revendication 5, dans lequel l'arbre de moteur (60b) et la vis sans fin (103) sont reliés par un joint cannelé.

7. Mécanisme d'embrayage (44) comprenant un actionneur pour embrayage selon l'une des revendications 1 à 6.

8. Ensemble de moteur thermique, comprenant un moteur thermique et un mécanisme d'embrayage (44) selon la revendication 7.

9. Véhicule de type à deux roues comprenant l'ensemble de moteur thermique selon la revendication 8.
